# EUROPEAN PATENT APPLICATION

(11) **EP 0 569 245 A2**
(43) Date of publication of application: **10.11.1993**
(21) Application number: 93303538.8
(22) Date of filing: 07.05.1993
(51) Int. Cl.: G11B 27/00, G11B 19/02, G11B 27/34, G11B 19/10, G01C 21/20

(54) **Method of reading and processing information of recording disc and apparatus for reading and processing the same**

(30) Priority: 08.05.1992 JP 116445/92
(71) Applicant: PIONEER ELECTRONIC CORPORATION, Meguro-ku Tokyo-to (JP)
(72) Inventor: Nishida, Junichi, c/o Pioneer Electronic Corp., Kawagoe-shi, Saitama-ken (JP); Araki, Morio, c/o Pioneer Electronic Corp., Kawagoe-shi, Saitama-ken (JP); Arakawa, Takeharu, c/o Pioneer Electronic Corp., Kawagoe-shi, Saitama-ken (JP); Ishida, Tessho, c/o Pioneer Electronic Corp., Kawagoe-shi, Saitama-ken (JP); Ayukai, Yasushiro, c/o Pioneer Electronic Corp., Kawagoe-shi, Saitama-ken (JP); Baba, Toshiharu, c/o Pioneer Electronic Corp., Kawagoe-shi, Saitama-ken (JP); Sakaguchi, Masahiko, c/o Pioneer Electronic Corp., Kawagoe-shi, Saitama-ken (JP); Nobe, Kenichi, c/o Pioneer Electronic Corp., Kawagoe-shi, Saitama-ken (JP); Kaneko, Michihiro, c/o Pioneer Electronic Corp., Kawagoe-shi, Saitama-ken (JP); Shinohara, Jun, c/o Pioneer Electronic Corp., Kawagoe-shi, Saitama-ken (JP)
(74) Representative: Brunner, Michael John

(57) **Abstract**

Recording information is read from a plurality of recording discs (17, 17-1, 17-6), which include first recording discs having table of contents information and volume descriptor information, and an information process is performed by use of the recording information. The reading and processing method includes the steps of: reading and registering the table of contents information of the recording discs each time of injecting a power supply; reading and registering the volume descriptor information of the recording discs each time of injecting the power supply; comparing each of the registered table of contents information and each of new table of contents information, which is read at the time of re-injecting the power supply, at the time of re-injecting the power supply; and omitting the step of reading the volume descriptor information when the registered table of contents information and the new table of contents information are coincident with each other according to a comparison result of the comparing step, and performing the information process by use of the registered volume descriptor information.

## Description

### 1. Field of the Invention

The present invention is related with a method of reading and processing information of a recording disc, such as a processing method in an on-vehicle information processing system, and is especially related with an information processing method suitable for performing the information process by use of a plurality of optical discs of various type.

### 2. Description of the Related Arts

There is a MCC (Multiple Car Computer) system in a car electronics field. In the MCC system, two or more information processing devices, such as a multi CD (Compact Disc) player, a navigation device, a tuner, and a cassette deck, are connected to one host CPU (Central Processor Unit) through a system bus and an I/O device, so that a bus network is built. All of these devices are controlled in a generalized manner by one host CPU on the basis of input and output operations of a key board and a display device.

As a CD used in the above mentioned system, a CD-ROM (Read Only Memory) in which map data of the navigation device is stored, may be utilized in addition to a CD for music (hereinbelow, it is called as a CD-DA). Further, a CD-ROM XA, in which still picture data for "karaoke" (music accompaniment play) is stored, may be also utilized.

The CD-ROM and the CD-ROM XA differ from the CD-DA in that VD information (Volume Descriptor : description word which appropriately expresses and describes the contents of the stored information in the disc) is written into these CD-ROM and CD-ROM XA, other than the TOC information (table of contents information). This VD information is read at the time of starting the reading operation of the disc, after loading a magazine to the multi CD player. For example, the VD information is used for displaying a title etc. of the disc in the magazine which is loaded in the multi CD player. The magazine is a casing to which a plurality of discs (for example, 6 discs) are packed in one body. The magazine has a structure which makes easy the auto-change of the discs.

Here, the operation of reading the TOC information and the VD information in such a MCC system, is as following, for example.

Namely, when an ACC switch (accessory switch) of the vehicle is turned ON, the host CPU requests the transmission of the information as for whether each recording disc exists or not, with respect to the multi CD player. When the ACC switch is ON, the multi CD player carries out scanning all the recording discs. The multi CD player generates disc existence information, and reads the TOC information. Subsequently, the host CPU requests the transmission of each TOC information of each recording disc, with respect to the multi CD player. And nextly, the host CPU distinguishes whether it is the CD-ROM or not as for each recording disc. The host CPU reads the VD information if needed.

In the above mentioned constitution, it is certainly necessary to read the VD information in order to use the information in each disc. The time required to read this VD information, including the time required for the operation of the multi CD player, is about several seconds. Since in the multi CD player, the number of discs is more than one, for example, in the case of 6 discs, it is required a time between about 40 to 60 seconds, including the time for changing the disc (exchanging between the discs in the magazine).

On the other hand, the power supply for such an on-vehicle apparatus, is interlocked with the ON/OFF of the ACC switch of the vehicle. The minimum required data is stored in a memory device, such as a RAM (Random Access Memory) of the system, to which the volatility of the data is prevented by a backup power supply. This backup recorded data includes the VD information. Here, there is a system, which can start the multi CD player without re-reading the VD information, even after turning off the ACC switch once.

However, when the magazine is exchanged to a different magazine in the state that the ACC switch is OFF, the VD information backed up and the VD information on the disc in the new magazine, come to be different from each other, so that the control of the apparatus becomes impossible or hard.

Accordingly, in this type of system, a circuit, which detects the state of the eject/load of the magazine of the multi CD player, may be separately prepared at the side of the host CPU. Alternatively, there is provided means for repeating reading of the VD information on each disc in the magazine at every ON/OFF of the ACC switch.

However, it is not convenient that the long time is needed until the reading or reproducing operation is started from the ON state of the ACC switch. Moreover, it becomes a cause of complication of the apparatus and the trouble generation, to provide a new additional circuit. Therefore, it is demanded to simplify the construction of the apparatus and at the same time to make the start of the reproduction operation quick.

It is therefore an object of the present invention to provide a method of and an apparatus for reading and processing information of a recording disc, in which the starting operation of reading the recording disc, can be quickly executed.

According to the present invention, the above object can be achieved by a method for reading recording information from a plurality of recording discs, which include first recording discs having table of contents information and volume descriptor information, and for performing an information process by use of the recording information. The method includes the steps of: reading and registering the table of contents information of the recording discs each time of injecting a power supply; reading and registering the volume descriptor information of the recording discs each time of injecting the power supply; comparing each of the registered table of contents information and each of new table of contents information, which is read at the time of re-injecting the power supply, at the time of re-injecting the power supply; and omitting the step of reading the volume descriptor information when the registered table of contents information and the new table of contents information are coincident with each other according to a comparison result of the comparing step, and performing the information process by use of the registered volume descriptor information.

According to the present invention, the table of contents information and the volume descriptor information of each recording disc are read and registered for every power supply injection. The table of contents information registered previously and the new table of contents information, are compared with each other at the time of re-injecting the power supply. If they are coincident with each other, it is judged that the exchange of the recording discs has not been carried out, so that the reading operation of the volume descriptor information is omitted. The registered volume descriptor information is used as it is. Therefore, the processing time for reading the volume descriptor, can be made short without adding a hardware element to judge the necessity of reading to volume descriptor information superfluously. As the result, the quick starting operation of the apparatus becomes possible.

According to the present invention, the above mentioned object can be also achieved by an apparatus for reading recording information from a plurality of recording discs, which include first recording discs having table of contents information and volume descriptor information, and performing an information process by use of the recording information. The apparatus is provided with: a device for accommodating the plurality of recording discs; a device for reading the table of contents information and the volume descriptor information of the recording discs each time of injecting a power supply; a device for registering the read table of contents information and volume descriptor information each time of injecting the power supply; a device for comparing each of the registered table of contents information and each of new table of contents information, which is read at the time of re-injecting the power supply, at the time of re-injecting the power supply; and a device for controlling the reading device and the registering device to omit reading and registering the volume descriptor information when the registered table of contents information and the new table of contents information are coincident with each other according to a comparison result of the comparing device, and for performing the information process by use of the volume descriptor information registered in the registering device.

Thus, the above mentioned reading and processing method of the present invention can be performed by use of the apparatus of the present invention, with the same advantageous effect.

The nature, utility, and further features of this invention will be more clearly apparent from the following detailed description with respect to preferred embodiments of the invention when read in conjunction with the accompanying drawings briefly described below.
FIG. 1 is a block diagram which shows an example of the whole constitution of a MCC system including a multi CD player of an embodiment of the present invention;
FIG. 2 is a block diagram which shows the MCC system of the embodiment;
FIG. 3 is a diagram which shows an example of accommodation of recording discs in a magazine of the embodiment; and
FIG. 4 is a flow chart of the operation of the embodiment.

Nextly, the preferred embodiment of the present invention will be explained on the basis of drawings.

First of all, a MCC system, to which a method of reading and processing information of a recording disc according to the present invention is applied, will be explained.

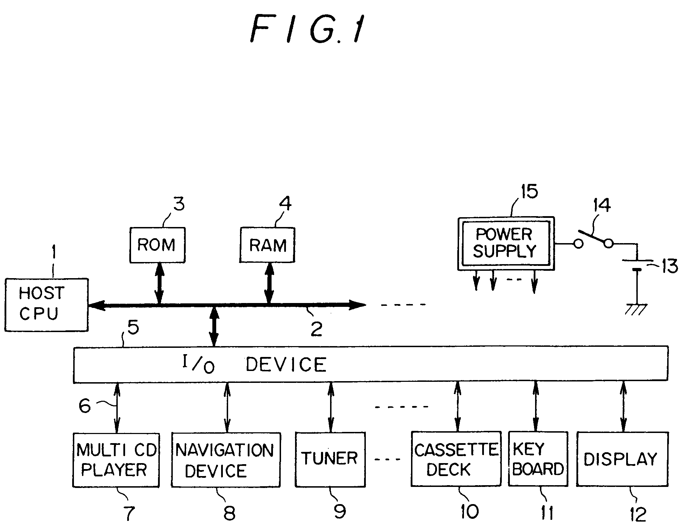

In FIG. 1, a MCC system includes a host CPU 1, a system bus 2, a ROM (Read Only Memory) 3, a RAM (Random Access Memory) 4, and an I/O device 5. The MCC system further includes a plurality of information processing devices such as a multi CD player 7, a navigation device 8, a tuner 9, a cassette deck 10, a KEY board 11, a display device 12, and so on, which are coupled to the host CPU 1 via an I/O bus 6, the I/O device 5 and the system bus 2. An vehicle to which the MCC system is installed, is provided with a power source 13, an ACC switch 14, and a power supply device 15.

All of these information processing devices are controlled in a generalized manner by the host CPU 1 on the basis of the input and output operations of the KEY board 11 and the display device 12.

The multi CD player 7 is adapted to read various CDs such as a CD-ROM storing the map data for the navigation device 8, a CD-DA storing the music data, a CD-ROM XA storing the still picture data for "karaoke" (music accompaniment play).

The CD-DA has the TOC information but does not have the VD information. On the other hand, each of the CD-ROM and the CD-ROM XA has the VD information as well as the TOC information. This VD information is read at the time of starting the reading operation of the disc, after loading a magazine to the multi CD player 7. For example, the VD information is used for displaying a title etc. of the disc in the magazine which is loaded in the multi CD player 7.

The MCC system is provided with a backup power, which is interlocked with the ON/OFF of the ACC 14 switch, so that the data stored in the RAM 4 storing the VD information etc., is prevented from the volatility.

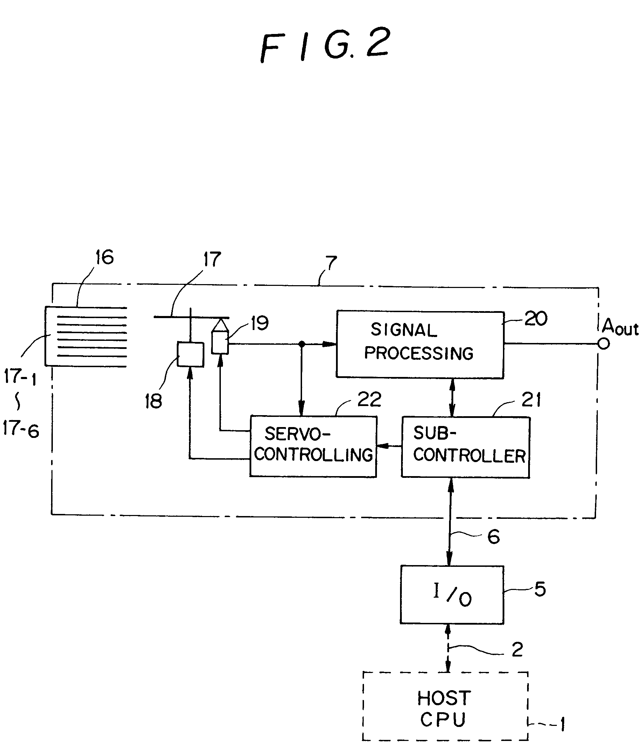

FIG. 2 shows the multi CD player 7 which is adapted to performing the method of processing information according to the present invention.

In FIG. 2, the multi CD player 7 is provided with a magazine 16, a CD 17, a spindle motor 18, an optical pickup 19, a signal processing device 20, a sub-controller 21, and a servo-controlling device 22.

A plurality of recording discs 17-1 to 17-6, are accommodated in the magazine 16, such that each of them can be loaded and unloaded on a tray independently. These discs include various discs such as a CD-DA for usual music reproduction, a CD-ROM for navigation, or a CD-ROM XA for music accompaniment play with a still picture and a telop.

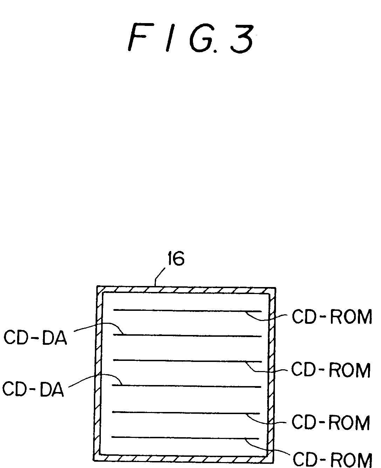

As shown in FIG. 3, the method of accommodating these various recording discs into the magazine 16, is arbitrary up to the user, and there is no special restriction. Therefore, the recording discs 17-1 to 17-6 in the magazine 16 are not always put in order. The magazine 16 is adapted to enable the auto-change of these recording discs.

In FIGs. 1 and 2, the operation of the MCC system is as following. Namely, when the ACC switch 14 is turned on and the magazine 16 is loaded, the multi CD player 7 carries out scanning of all recording discs 17-1 to 17-6 in the magazine 16. The recording disc 17, which is a reading object, is driven at predetermined number of rotations by the spindle motor 18. The recording information on the recording disc 17 is read by the optical pickup 19. At this time, the required controlling for the number of rotations and the reading positions (controlling for focusing, tracking etc.), are performed by the servo-controlling device 22, with respect to the spindle motor 18 and the optical pickup 19. The RF (Radio Frequency) signal outputted from the optical pickup 19 is subjected to an error correction, a decoding process, etc. by the signal processing device 20. The TOC information and the VD information are transmitted to the host CPU 1 through the sub controller 21, the I/O bus 6, and the I/O device 5. They are stored in the RAM 4 on the side of the host CPU 1. The data Aout is the demodulated data of the CD-DA.

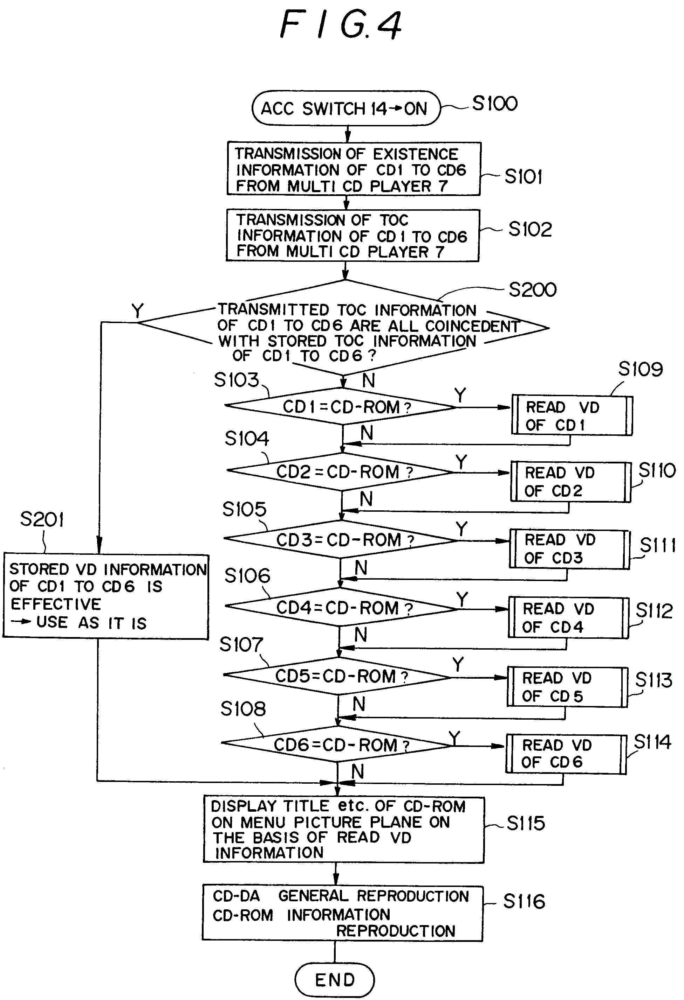

Nextly, an example of the method of processing the information by the MCC system according to the present invention, which is constituted as mentioned above, will be explained on the basis of FIG. 4, which is the operation flow of reading the TOC information and the VD information.

In FIG. 4, when the ACC switch 14 is turned on (step S100), the host CPU 1 requests the transmission of the information as for whether each recording disc CD 1 to CD 6 exists or not, with respect to the multi CD player 7. Then, the multi CD player 7 checks whether the magazine 16 is loaded or not, and whether the recording discs CD1 to CD6 exist in the magazine 16, by the scanning operation. According to those existence states, the multi CD player 7 generates the existence information (for example, it sets up a flag). The multi CD player 7 also reads the TOC information. Then, the host CPU 1 fetches the existence information from the multi CD player 7 (step S101).

Subsequently, the host CPU 1 requests the transmission of each TOC information of each recording disc CD1 to CD6, with respect to the multi CD player 7. Then, the host CPU 1 fetches the TOC information of each recording disc CD1 to CD6 (step S102).

Nextly, at the step S200, the host CPU 1 judges whether the transmitted TOC information of the CD1 to CD6, is coincident with the TOC information of the CD1 to CD6 registered at the time when the ACC switch 14 was turned ON at the previous time.

At the step S200, if the TOC information is judged to be different as for even one recording disc, the host CPU 1 assumes that the exchange of the discs in the magazine 16 has been executed. And, the process is forwarded to the routine on the side of the step S103.

At the steps S103 to S114, the host CPU 1 distinguishes whether it is the CD-ROM or not as for each recording disc CD1 to CD6 (step S103 to 108). The host CPU 1 reads the VD information if needed (steps S109 to S114). Subsequently, the host CPU 1 develops the title etc. of the disc, which is the CD-ROM, on a MENU picture plane of the display device 12 on the basis of each read VD information (step S115). A user selects a desired disc from this MENU picture plane, so that, in the case of the CD-DA, a music is reproduced, or in case of the CD-ROM, an area map required for a navigation is reproduced (step S116).

However, at the step S200, if the old and new TOC informations are judged to be wholly coincident with each other, the host CPU 1 assumes that the exchange of the discs has not been executed, so that the process is forwarded to the step S201.

Namely, if a plurality of various recording discs exist in a mixed state, the possibility that the recording disc having the completely same TOC information exists, is very low. And, even if such a recording disc exists, the possibility that all of the recording discs in the magazine 16 have the same TOC information before and after the exchange, is almost nil. From this fact, the identity of the recording disc can be judged by checking the identity of the old and new TOC information as mentioned above, as the judgement factor of the disc exchange in the magazine 1.

In this manner, only if it is judged that there is no identity of the discs in the magazine 16 at the step S200, the VD information is read again as for the CD-ROM in the steps S103 to S114.

On the contrary, if the TOC information is wholly in agreement as for all of the CD1 to CD6 by the judgement at the step S200, the process is forwarded to the step S201, in which it is judged that the VD information registered previously is effective, and the information is used as it is without processing.

The subsequent processes are executed in the steps S115 and S116.

In this manner, the system can start the multi CD player 7 without re-reading the VD information, if it is not necessary, so that the time required for the starting operation of the system can be made short.

Further, if the magazine is exchanged to a different magazine in the state that the ACC switch 14 is OFF, the VD information is read again for the new magazine, so that the appropriate VD information can be obtained, to enable the appropriate control of the apparatus.

Furthermore, in the present embodiment, a circuit which detects the state of the eject/load of the magazine of the multi CD player, is not necessary, which is a great advantage of the present embodiment.

As described above in detail, according to the present invention, the table of contents information, which has been registered previously, and the table of contents information, which is newly read, are compared with each other at the time of re-injecting the power supply, as described above in detail. According to the comparison result, the volume descriptor information is read. Therefore, the processing time for reading the volume descriptor, can be made short without adding a hardware element to judge the necessity of reading to volume descriptor information superfluously. As the result, the quick starting operation of the apparatus becomes possible.

The invention may be embodied in other specific forms without departing from the spirit or essential characteristics thereof. The present embodiments are therefore to be considered in all respects as illustrative and not restrictive, the scope of the invention being indicated by the appended claims rather than by the foregoing description and all changes which come within the meaning and range of equivalency of the claims are therefore intended to be embraced therein.

## Claims

1. A method of reading recording information from a plurality of recording discs (17, 17-1 to 17-6), which include first recording discs having table of contents information and volume descriptor information, and performing an information process by use of the recording information, characterized in that said method comprises the steps of:
reading and registering the table of contents information of said recording discs each time of injecting a power supply;
reading and registering the volume descriptor information of said recording discs each time of injecting the power supply;
comparing each of the registered table of contents information and each of new table of contents information, which is read at the time of re-injecting the power supply, at the time of re-injecting the power supply; and
omitting the step of reading the volume descriptor information when the registered table of contents information and the new table of contents information are coincident with each other according to a comparison result of the comparing step, and performing the information process by use of the registered volume descriptor information.

2. A method according to claim 1, characterized in that said first recording disc comprises at least one of a CD-ROM for storing map information and a CD-ROM XA for storing music accompaniment play information.

3. A method according to claim 1 or 2, characterized in that said plurality of recording discs include second recording discs having the table of contents information and not having the volume descriptor information.

4. A method according to claim 3, characterized in that said method further comprises the steps of:
reading and registering the table of contents information of said second recording discs;
judging whether each recording disc to be read is the first recording disc or the second recording disc; and
omitting the step of reading the volume descriptor information when it is judged to be the second recording disc in the judging step.

5. A method according to claim 1, characterized in that said method further comprises the step of performing a display on the basis of the registered volume descriptor information.

6. An apparatus for reading recording information from a plurality of recording discs (17, 17-1 to 17-6), which include first recording discs having table of contents information and volume descriptor information, and performing an information process by use of the recording information, characterized in that said apparatus comprises:
means (16) for accommodating said plurality of recording discs;
means (7, 18, 19, 20, 21) for reading the table of contents information and the volume descriptor information of said recording discs each time of injecting a power supply;
means (4) for registering the read table of contents information and volume descriptor information each time of injecting the power supply;
means (1) for comparing each of the registered table of contents information and each of new table of contents information, which is read at the time of re-injecting the power supply, at the time of re-injecting the power supply; and
means (1) for controlling said reading means and said registering means to omit reading and registering the volume descriptor information when the registered table of contents information and the new table of contents information are coincident with each other according to a comparison result of the comparing means, and for performing the information process by use of the volume descriptor information registered in said registering means.

7. An apparatus according to claim 6, characterized in that said first recording disc comprises at least one of a CD-ROM for storing map information and a CD-ROM XA for storing music accompaniment play information.

8. An apparatus according to claim 6 or 7, characterized in that said plurality of recording discs (17, 17-1 to 17-6) include second recording discs having the table of contents information and not having the volume descriptor information.

9. An apparatus according to claim 8, characterized in that said controlling means (1) is adapted to judging whether each recording disc to be read is the first recording disc or the second recording disc, and control said reading means and said registering means to omit reading and registering the volume descriptor information when it is judged to be the second recording disc.

10. An apparatus according to any one of claims 6 to 9, characterized in that said apparatus further comprises a display means (12) for performing a display on the basis of the registered volume descriptor information.

11. An apparatus according to any one of claims 6 to 10, characterized in that said reading means (7) comprises a multi CD player.

12. An apparatus according to claim 11, characterized in that said accommodating means (16) comprises a magazine, which is adapted to exchange said plurality of recording discs so as to set one recording disc to be read by the reading means.
